# EUROPEAN PATENT APPLICATION

(11) **EP 2 371 776 A1**
(43) Date of publication of application: **05.10.2011**
(21) Application number: 10003462.8
(22) Date of filing: 30.03.2010
(51) Int. Cl.: C03C 15/00

(54) **Method for producing flat glass**

(71) Applicant: Linde AG, 80331 München (DE)
(72) Inventor: Carney, Stephen, 81245 München (DE); Reiss, Werner, 83075 Bad Feilnbach (DE)
(74) Representative: Kasseckert, Rainer

(57) **Abstract**

The invention relates to a method for producing flat glass comprising the following steps of melting a glass composition to form a glass melt, pouring the glass melt in a flat glass chamber for forming flat glass on a bath of molten tin or a molten tin alloy, or rolling the molten glass between forming rollers for forming flat glass, conveying the flat glass from the flat glass chamber or from the rollers into an annealing chamber for annealing the flat glass, wherein before or during or directly after said annealing the flat glass is etched on a surface, preferably the surface which was in contact with the molten tin or molten tin alloy, wherein by the etching a nanostructured surface is formed on the flat glass.

## Description

The invention relates to a method and for producing flat glass and a glass pane.

Flat glass manufacturing can be considered to include rolled glass, patterned glass, drawn glass, figured glass and flat glass manufacturing

The basic process for the production of flat glass is described in the patent of L. A. B. Pilkington et al. US 2,911,759 according to which a flat glass is produced in ribbon form. A ribbon is formed of molten glass. The ribbon is cooled to an extent sufficient to make it stiff enough to stabilise its dimensions and thereafter the ribbon is directed onto a bath of molten tin. The ribbon is floated and continuously advanced on the tin bath, wherein the surface of the ribbon is softened and then progressively and sufficiently cooled before leaving the bath.

There are numerous of improvements of this basic process. Particularly, there are different processes for finishing flat glass. In US 3,284,181 a method is disclosed according to which a cooled and washed flat glass ribbon is treated with an aqueous acid solution of a fluorine containing compound for removing a surface layer of the glass ribbon by means of etching. It has been found that tin or tin compounds are present in the floated surface and this can cause an iridescent layer. This layer is removed by etching.

This idea was taken up in JP 9295833 in order to remove small foreign particles such as top speck from the surface of a glass substrate produced by a flat glass process. Besides the use of hydrofluoric acid, an aqueous, acidic solution containing bivalent chromium ions can also be used. Also according to JP 9295832, the surface of a glass ribbon is etched with an acidic solution containing chromium²⁺ ions. Another etching method is described in JP 10085684 A. Here, an ammonium halide is pyrolized on the greatly heated glass ribbon and the impurities on the surface of the glass ribbon volatize in the form of easily vaporizing halides.

All of these solutions for removing tin impurities from the glass surface take place as finishing steps.

Furthermore, from J. Yoo et al.; "Black surface structures for crystalline silicon solar cells", Materials Science and Engineering B 159-160 (2009) 333-337 it is known that the efficiency of solar cells can be improved by a front surface texturing by wet or dry etching. With random reactive ion etching (RIE) techniques an anti reflection coating is achieved on the surface of solar cells. A SF₆/O₂ RIE process is used for texturing of silicone. In SF₆/O₂ plasma etching, SF₆ gas is used to intentionally form F* radicals to etch the silicone by producing volatile SiF₄. Also oxygen produces O^{*} radicals for passivation of the silicone sidewall surface with SiₓOyF_{z} which helps to control etched profiles.

H. Jansen et al.; "The Black Silicon Metod II: The Effect Of Mask Material And Loading On The Reactive Ion Etching Of Deep Silicon Trenches", in Microelectronic Engineering 27 (1995) 475-480 describes the use of an SF₆/O₂ CHF₃ plasma for etching deep trenches having preferably vertical walls. A suitable recipe for the RIE is influenced by various parameters such as power, pressure, and gas flow. However, the silicone is turned black when a vertical wall recipe is found. Therefore, this method is called the "black silicon method" (BSM).

H. Jansen et al.; "The Black Silicon Method. VIII. A study of the performance of etching silicone using SF6/O2-based chemistry with cryogenical wafer cooling and a high density ICP source", Microelectronics Journal 32 (2001) 769-777 describes the application of the black silicon method to trace the parameter setting where a good anisotropy can be achieved. The certain parameter region is called black silicon region, which is characterised by a rough surface filled with long tailed pillars which absorb all the incoming light.

Further etching methods using fluorine containing gases are discussed in E. Gogolides et al.; "Highly Anisotropic Room-Temperature sub-half-micron Si Reactive Ion Etching using Fluorine only containing gases", Microelectronics Engineering 27 (1995) 449-452 and W. Pfleging et al.; "CCl4 assisted CF4 etching of silicone in a microwave assisted LDE (laser dry etching) process", Applied Surface Science 96-98 (1996) 496-500.

It is also known to use fluorine plasmas for reactive ion etching (RIE) of quartz and glasses. In this respect it is also referred to
- P.W. Leech, "Reactive ion etching of quartz and silica-based glasses in CF4/CHF3 plasmas" Vacuum 55 (1999) 191-196,
- J.H. Park et al. "Deep dry etching of borosilicate glass using SF6 and SF6/Ar inductively coupled plasmas", Microelectronic Engineering 82 (2005) 119-128;
- X. Li et al., "Deep reactive ion etching of pyrex glass using SF6 plasma", Sensors and Actuators A 87 (2001) 139-145, and
- J. Liu et al., "Etch rate and surface morphology of plasma etched glass and glass-ceramic substrates", Journal of Non-Crystalline Solids 342 (2004) 110-115.

All of these solutions for modifying the surface are performed off-line on individual pieces of flat glass or other materials.

An object of the invention is to provide a method for modifying flat glass during the manufacturing process.

The object is solved by a method according to claim 1. Advantageous embodiments of the invention are characterized in the subclaims.

The method for producing flat glass according to the present invention comprises the following steps:
- melting a glass composition to form a glass melt,
- pouring the glass melt in a flat glass chamber for forming flat glass on a bath of molten tin or a molten tin alloy, or
   rolling the molten glass between forming rollers for forming flat glass,
- conveying the flat glass from the flat glass chamber or from the rollers into an annealing chamber for annealing the flat glass,
wherein before or during or directly after said annealing the flat glass is etched on a surface, preferably the surface which was in contact with the molten tin or molten tin alloy, wherein by the etching a nanostructured surface is formed on the flat glass.

The surface of flat glass which was in contact with molten tin or molten tin alloy comprises tin microparticles. Such tin microparticles are small particles which consist of metallic tin and/or tin oxide. The inventors of the present invention realized, that these tin microparticles can act as catalyst for the etching process. Thus the etching process is more effective in the areas of the surface of the glass where such tin microparticles are present. Therefore, the flat glass is primarily etched at the spots where such tin microparticles are located. At these spots small recesses are carved. The tin microparticles form a kind of positive mask for etching. The tin microparticle are randomly distributed over the surface of the flat glass, thus a surface is formed having randomly distributed recesses. The etching parameters are preferably adjusted in such a way that recesses with the depth of 50 nm to 400 nm and preferably 100 nanometre to 300 nm are produced.

The etching is carried out before or during or directly after the annealing of the flat glass so that the temperature of the flat glass exiting the tin bath or exiting an annealing lehr is used to enhance the etching rate. Furthermore, the tin microparticles on the surface of the flat glass are used as mask for the etching process. These advantages are achieved by carrying out the etching in-line of the production process of the flat glass.

Preferably, the glass melt is formed to flat glass in form of a continuous ribbon and the etching is applied to the surface of the continuous glass ribbon. In a particular preferred embodiment the inventive method is applied to float glass. The invented process can be integrated into the glass manufacturing process and can be carried out in-line. Creating of an anti-reflective surface structure can be achieved in-line and in particular before the flat glass has been cut, edged and/or drilled.

The inventive etching is preferably carried out after the hot glass melt has been formed into a glass ribbon which is done either by floating or by rolling. On the other hand, the etching process is applied to the glass still within the glass manufacturing line, that is before the glass ribbon is cut into the desired pieces. The invention preferably utilizes the temperature and condition of the flat glass during the annealing step, i.e. between the end of the forming step and the glass ribbon cutting step at the end of the glass manufacturing line.

As the nanostructure is directly formed in the flat glass without a coating the surface texture will not change during the life of the glass pane being made from this flat glass.

The etching is preferably carried out by reactive ion etching (RIE), wherein a SF₆ plasma, CF₄ plasma, F₂ plasma and/or CL₂ plasma or HF is used. The inventors assume that if a fluorine plasma is used then there arise fluorine-tin ions which are reacting with the sodium of the glass composition to sodium-fluorine, wherein the tin is set free again.

The nanostructured surface is preferably embodied in such a way that the texture formed by the nano particles has a height of 50 nm to 400 nm and preferably 100 nm to 300 nm. Preferably the nanostructured surface of the flat glass is at least once toughened by a chemical process applied at a temperature above 400 °C and below a temperature which is 50 °C above the glass transition temperature Tg. Thus, the preferred temperature range for toughening is between 400 °C and Tg + 50 °C. The toughening may be carried out before or after the etching of the flat glass.

The glass transition temperature is the temperature at which liquid glass changes to an amorphous structure. Different operational definitions of the glass transition temperature exist. In this application the glass transition temperature shall mean the transition temperature based on a measurement of the energy release on heating in differential scanning calorimetry (DSC). The glass transition temperature depends on the cooling rate, molecular weight distribution and can be influenced by additives.

The nanostructure weakens the flat glass, wherein the recesses form starting points for cracks. To counteract these cracks the nanostructured surface can be toughened. Preferably a first toughening step is carried out in-line of the production process and the final toughening or tempering can be made after cutting, etching and drilling. Within this application the terms "toughening", "tempering" and "hardening" are used as synonyms if not explicitly otherwise stated. The chemical process for toughening the flat glass is based on an ion exchange of the sodium ions with larger potassium ions. A glass chemistry in the weight percent ranges SiO₂ 63% - 73% Al₂O₃ 3% - 8% MgO 0.5% - 6% CaO 4% - 12% K₂O 0.1 % - 4% Na₂O 12% - 15% that favors ion exchange reduces the chemical reaction at the surface that cause bloom and lower light transmission and if a dielectric layer is provided on the glass surface then a lower sodium ion concentration reduces the incident of migration of sodium ions from the glass through the dielectric layer. These two effects are particularly advantageous if the flat glass is used as a substrate for a solar cell or a solar module.

Furthermore, the present invention relates to a chemically modified glass pane which is made of flat glass and has a nanostructured surface, wherein the nanostructured surface is formed in the surface of the body of the glass pane which has a substantially uniform composition.

Ordinary glass panes having a nanostructure have a coating in which the structure is formed. The coating has a different composition than the residual body of the glass pane. The glass pane according to the present invention has both in the surface portion of the body which is adjacent to the structured surface as well as in the central portion of the body of the pane substantially the sample composition. Of course the composition of the surface portion of the body which is adjacent to the structured surface can differ to the composition of the central portion by ions which were embedded by the etching process or by a lower concentration of sodium ions which were withdrawn at the toughening or tempering process. Besides such smaller changes of the ion concentration the composition is substantially the same in the inner and in the surface portion of the glass pane. Thus the glass pane forms an integral body with the structured surface.

A solar module having a glass pane as described above provides substantial advantages over known solar modules, because the surface of the glass pane has anti-reflecting characteristics and optimum light transmission is secured. These characteristics are maintained through the complete lifetime of the solar module as the nanostructure is formed in the integral body of the glass pane. Further advantages are achieved if the surface, particularly the structured surface is toughened or tempered, because then the sodium ion concentration is reduced which causes a reduced danger of deterioration of the light transmission and reduces the migration of sodium ions from the glass to other elements of the solar module.

The invention is explained in more detail by means of the accompanying drawings. In the drawings it is shown in:
Fig. 1 a production site for producing flat glass in a simplified illustration,

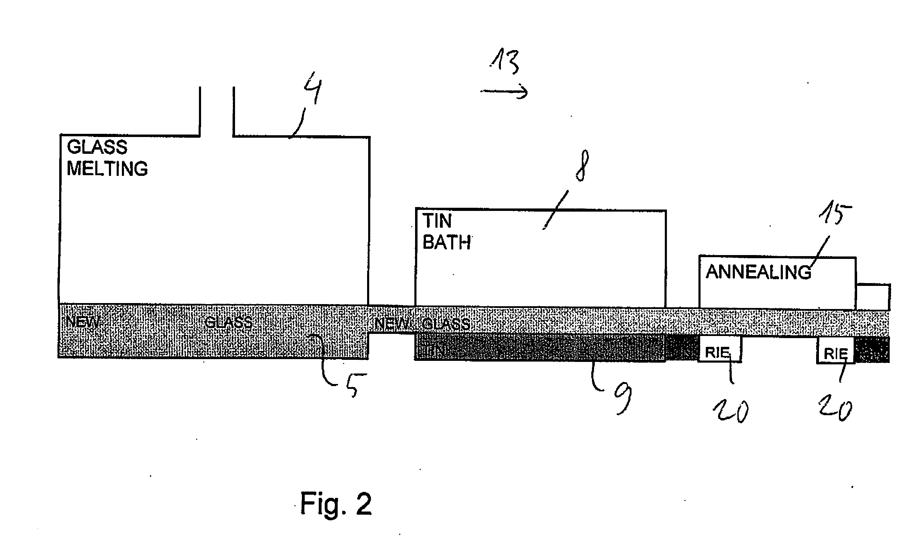

Fig. 2 schematically the flat glass production with a plasma reactor for carrying out a reactive ion etching (RIE), and
Fig. 3a and 3b a portion of glass pane with a micro- or nanostructure in a cross sectional view with an optimal (Fig. 3a) and a realistic (Fig. 3b) structure.

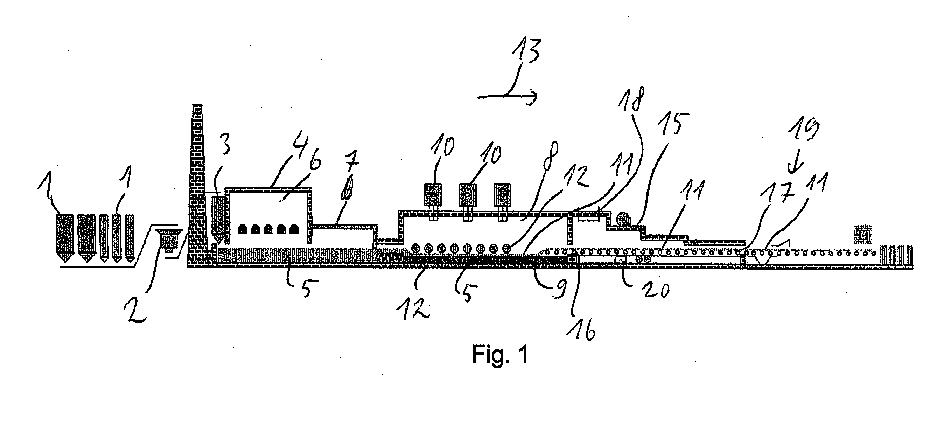

Fig. 1 shows in a simplified illustration a prodution site for producing flat glass which is suitable for carrying out the present invention. The production site comprises containers 1 for storing raw material for the glass production. The raw material is mixed to a batch and collected in a batch container 2. From the batch container 2 the batch is conveyed to a charging silo 3 for charging a glass furnace 4 with the batch. The furnace is heated to a temperature above 1200°C for melting the batch to molten glass 5. Preferably, the molten glass is a soda lime glass. Then the temperature of the furnace 4 is adjusted to at least 1500°C.

The molten glass 5 flows from a melting chamber 6 in the furnace to a discharge chamber 7 and from the discharge chamber 7 of the glass furnace 4 into a tin bath chamber 8. The tin bath chamber 8 comprises a bath with molten tin or with a molten tin alloy 9. The tin bath chamber 8 comprises heating elements 10 for providing a certain temperature profile.

A ribbon of molten glass 5 is floating on the molten tin 9, wherein the ribbon of glass is formed on the molten tin to a flat and smooth flat glass 11. Therefore, the flat glass is often also called flat glass. In the tin bath chamber 8 rollers 12 are provided which are in contact with the upper surface of the flat glass 11. The rollers 12 are driven for moving the flat glass in a transportation direction 13. At the end of the tin bath chamber 8 the flat glass 11 is picked up by conveyer mechanism which usually comprises a plurality of rollers 14. By means of this conveyor mechanism the flat glass 11 is transported through an annealing lehr 15. The annealing lehr 15 comprises an entrance 16 through which the flat glass 11 enters the annealing lehr 15 and an exit 17 through which the flat glass 11 leaves the annealing lehr 15. The annealing lehr 15 comprises a heating element 18 which provides a temperature profile which varies in transportation direction 13. At the entrance 16 the temperature is about 600°C, wherein at the exit 17 the temperature is reduced to about 200°C. At the exit the flat glass 11 is cooled down to a temperature of about 200°C. The flat glass 11 is then conveyed to a cutting line 19 in which the ribbon of the flat glass 11 is cut in separate glass panes. Further processing stations for bending, grinding, drilling, tempering and toughening can follow.

In the process between the end of the forming process and the end of the annealing lehr 15 an etching unit 20 is provided beneath a transportion path of the flat glass 11.

The etching unit 20 comprises a plasma reactor having an electro discharger for producing an active plasma gas. A mixture of an etching gas and a carrier gas is blown through the electro discharger, wherein the etching gas is ionised and the ionised plasma gas is directed to the underside of the flat glass 11.

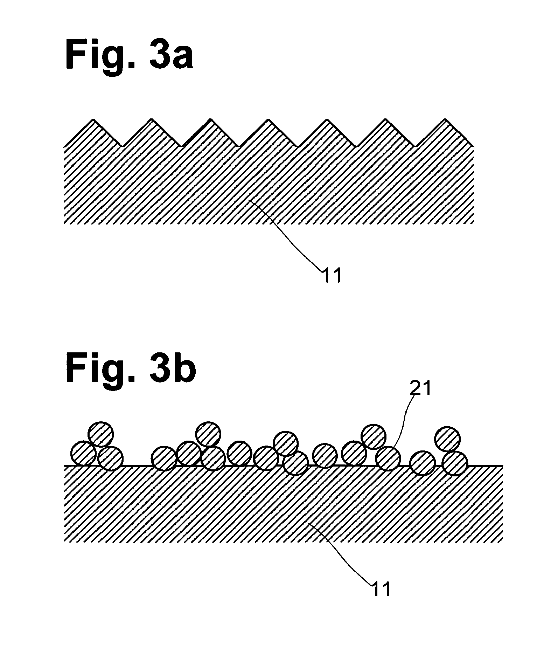

As the underside of the flat glass 11 was in contact with the molten tin or the molten tin alloy 9 it comprises a plurality of tin microparticles which are randomly distributed on the surface of the underside of the flat glass 11. These tin microparticles act as a catalyst for the etching so that the etching is at the spots of the tin microparticles more efficient than on the other parts of the surface of the flat glass 11. This causes that recesses 21 are etched on the spots where tin microparticles are placed (Fig. 3b).

The preferred etching gas is CF₄, because fluorine is active in etching and carbon ions can be embedded in the surface portion of the glass without disturbing the glass. The fluorine ions are firstly reacting with the tin to a fluorine-tin composition which converts into a sodium-fluorine composition and releases the tin. The sodium-fluorine composition vaporizes and is removed from the flat glass 11. Other suitable etching gasses are F₂, SF₆ and CL₂. The etching gases SF₂ and CL₂ are practically functional as etching gas, however, they are difficult to handle with respect to environmental requirements. These gases should be used only in a closed system.

A suitable carrier gas is e.g. H₂. There are also known processes for producing a flat glass in which also to the upper surface of the flat glass a fluid is applied whose composition largely corresponds to that of the bath (see US 2007/0261443 A1). In such a case also the upper side of the flat glass 11 is in contact with molten tin or a molten tin alloy. Thus it is possible also to etch the upper side of the flat glass 11 to achieve a nanostructured surface.

The preferred glass composition is a soda lime glass.

The optimum surface structure would have triangular trenches with a depth of about 300 nanometer and a width of about 100 nm (Fig. 3a). This would provide perfect antireflection properties. Due to the random distribution of the tin microparticles the recesses 21 are produced with the same random distribution. However, first prototypes of such produced glass panes have revealed good antireflection properties and self cleaning characteristics.

As the etching is done in-line of the production process of flat glass the temperature of the flat glass in the annealing lehr 15 or directly after the annealing lehr 15 is used for enhancing the etching efficiency. The optimum etching temperature can be selected by placing the etching unit 20 at the position of the transportation path where the optimum temperature is set by the temperature profile of the annealing lehr.

The invention is described above by means of a preferred embodiment. However, the scope of the invention covers also different modifications and variations. For example, it is possible to use instead of a reactive ion etching method with an active plasma gas a wet etching method. This can be also carried out in the annealing lehr. The above described embodiment is a method by which the flat glass is formed on a bath of molten tin. This is the preferred embodiment. Under the scope of the present invention it is also possible to form the flat glass by means of rollers.

Furthermore, the flat glass can be subjected to a toughening by a chemical process or by a thermal process of heating and rapidly cooling the flat glass. The chemical toughening process can also be carried out before, in or after the annealing lehr 15 directly after the etching.

The flat glass produced according to the present invention is particularly suitable as substrate or a cover plate or base plate for solar cells. Solar cells using such a substrate or cover plate or base plate can achieve a longer lifetime, a higher efficiency due to the anti reflection properties.

The flat glass produced according to the above described procedure is made with a thickness of 3.2 mm. It is intended to use chemical toughening to allow the thickness to be reduced to 2.0 to 2.4 mm while achieving the same or better mechanical properties as available from the thicker glass.

### List of references

- 1: container
- 2: batch container
- 3: charging silo
- 4: glass furnace
- 5: molten glass
- 6: melting chamber
- 7: discharge chamber
- 8: tin bath chamber
- 9: molten tin/molten tin alloy
- 10: heating elements
- 11: flat glass
- 12: roller
- 13: transportation direction
- 14: roller
- 15: annealing lehr
- 16: entrance
- 17: exit
- 18: heating element
- 19: cutting line
- 20: etching unit
- 21: recess

## Claims

1. Method for producing flat glass (11) comprising the following steps:
- melting a glass composition to form a glass melt (5),
- pouring the glass melt (5) in a flat glass chamber (8) for forming flat glass (11) on a bath of molten tin or a molten tin alloy (9), or
rolling the molten glass between forming rollers for forming flat glass,
- conveying the flat glass (11) from the flat glass chamber (8) or from the rollers into an annealing chamber (15) for annealing the flat glass (11),
wherein before or during or directly after said annealing the flat glass (11) is etched on a surface, preferably the surface which was in contact with the molten tin or molten tin alloy, wherein by the etching a nanostructured surface is formed on the flat glass (11).

2. Method according to claim 1,
wherein the flat glass (11) is etched by reactive ion etching.

3. Method according to claim 2,
wherein the reactive ion etching is carried out by using a SF₆ plasma, CF₄ plasma, F₂ plasma and/or Cl₂ plasma or HF.

4. Method according to claim 1,
wherein the flat glass (11) is etched by means of wet etching.

5. Method according to any one of the claims 1 to 4,
wherein the etching is carried out by a temperature of the flat glass (11) which is in the range of 200°C to 800°C.

6. Method according to any one of the claims 1 to 5,
wherein the flat glass (11) is made of soda lime glass.

7. Method according to one of the claims 1 to 6;
wherein the surface of the flat glass (11) is at least once toughened or tempered by a chemical process or by heating just below its softening temperature of the flat glass (11) and by cooling the flat glass (11) immediately after the heating, wherein the toughening or tempering is carried out after the etching of the flat glass (11).

8. Glass pane, wherein
the glass pane is made of flat glass and which has a nanostructured surface wherein the nanostructured surface is formed in the surface of the body of the glass pane which has a substantially uniform composition.

9. Glass pane according to 8,
wherein the micro- or nanostructured surface comprises recesses with a depth of 50 nm to 400 nm and preferably 100 nm to 300 nm.

10. Glass pane according to 9,
wherein the recesses are randomly distributed over the surface of the glass pane.

11. Glass pane according to any one of the claims 8 to 10,
wherein the glass pane is produced by the method according to one of the claims 1 to 7.

12. Solar module having a glass substrate, wherein the glass substrate is a glass pane according to one of the claims 8 to 10 and the nanostructured surface forms the surface for incidence of light of the solar module.
